# EUROPÄISCHE PATENTSCHRIFT

(11) **EP 0 659 233 B1**
(45) Veröffentlichungstag und Bekanntmachung des Hinweises auf die Patenterteilung: **05.03.1997**
(21) Anmeldenummer: 94923719.2
(22) Anmeldetag: 11.07.1994
(51) Int. Cl.: F01M 9/00, F01M 1/08

(54) **VERFAHREN UND ANORDNUNG FÜR DIE SCHMIERMITTELVERSORGUNG EINER HUBKOLBENMASCHINE**
PROCESS AND ARRANGEMENT FOR SUPPLYING LUBRICANT TO A RECIPROCATING PISTON ENGINE
PROCEDE ET SYSTEME D'ALIMENTATION EN LUBRIFIANT D'UN MOTEUR A PISTON ALTERNATIF

(30) Priorität: 12.07.1993 DE 4323262
(43) Veröffentlichungstag der Anmeldung: 28.06.1995
(73) Patentinhaber: FEV Motorentechnik GmbH & Co. KG, D-52078 Aachen (DE)
(72) Erfinder: SPIEGEL, Leo, D-52062 Aachen (DE); PISCHINGER, Franz, D-52072 Aachen (DE)
(74) Vertreter: Langmaack, Jürgen, Dipl.-Ing.
(86) Internationale Anmeldenummer: EP9402262
(87) Internationale Veröffentlichungsnummer: WO9502753

(56) Entgegenhaltungen:
- EP-A- 0 003 439
- DE-A- 4 039 169
- DE-C- 355 070
- FR-A- 675 371
- FR-A- 942 715
- FR-A- 2 531 747
- US-A- 1 967 251
- PATENT ABSTRACTS OF JAPAN vol. 14, no. 49 (M-927) 29. Januar 1990 & JP,A,01 277 612 (NISSAN) 8. November 1989

## Beschreibung

Die Erfindung betrifft ein Verfahren und eine Anordnung zur Versorgung der Schmierstellen einer Hubkolbenmaschine, insbesondere der Laufflächen der Kolben/Zylinderrohreinheit, mit einem flüssigen Schmiermittel. Insbesondere bezieht sich die Erfindung auf eine Schmiermittelversorgung von Verbrennungsmotoren, so daß im folgenden überwiegend von Hubkolbenmotoren die Rede ist, ohne daß damit eine Einschränkung verbunden sein soll.

Die Schmierung der Schmierstellen eines Hubkolbenmotors, beispielsweise eines Viertakt-Motors, erfolgt in der Regel durch eine Druckumlaufschmierung, bei der das Schmieröl aus einem Speicher über eine Pumpe und Verteilungsleitungen zu den einzelnen Schmierstellen geführt wird. Die Lagerungen zwischen Pleuel und Kurbelwelle einerseits und Kurbelwelle und Motorblock andererseits werden dabei über entsprechende Bohrungen in der Kurbelwelle bzw. im Gehäuse mit Schmieröl versorgt, während die Schmierung der Kolben/Zylinderrohreinheiten durch das in dem Kurbelgehäuse vorhandene Spritzöl erfolgt. Die Schmierung der Kolben/Zylinderrohreinheit mittels Spritzöl hat den Nachteil, daß in der Regel wesentlich mehr Schmieröl als erforderlich der Schmierstelle zugeführt wird. Es müssen daher Ölabstreifringe vorgesehen werden, die eine Erhöhung der Reibung zwischen Kolben und Zylinderrohr bewirken und so den Wirkungsgrad des Verbrennungsmotors herabsetzen.

Bei Zweitakt-Verbrennungsmotoren wird neben der Druckumlaufschmierung bei externen Spülverfahren auch die Gemisch-Schmierung, insbesondere bei Kurbelkastenspülung, verwendet. Bei diesem Schmierungssystem wird das Schmieröl dem Kraftstoff zugesetzt. Das Schmieröl wird gemeinsam mit dem Kraftstoff zerstäubt und gelangt mit der von dem Motor angesaugten Luft zu den Schmierstellen. Dieses Schmierungssystem hat zum einen den Nachteil, daß das Schmiermittel nur unkontrolliert den einzelnen Schmierstellen zugeführt werden kann. Zum anderen besteht ein Nachteil darin, daß der größte Anteil des dem Kraftstoff zugesetzten Schmiermittels über den Brennraum des Verbrennungsmotors wieder ausgestoßen wird, ohne zur Schmierung der Schmierstellen beizutragen. Dieses Schmierungssystem erfordert daher einen erhöhten Schmiermittelverbrauch und führt zu einer hohen Umweltbelastung.

Weiterhin ist es bei Zweitakt-Verbrennungsmotoren bekannt, das Schmieröl in Abhängigkeit von Last und/oder Drehzahl des Motors zuzuführen. Bei diesem sogenannten Getrennt-Schmiersystem erfolgt die ölzufuhr je nach Bauausführung zum Kraftstoff, in die Ansaugluft oder direkt über flüssiges Drucköl zu den Schmierstellen. Mit diesem Schmiersystem ist eine genaue Dosierung der zugeführten Schmierölmenge nicht oder nur mit großem Aufwand möglich. Es ist daher bekannt, das Schmieröl getaktet, also mit Zeitabständen, der Schmierstelle zuzuführen. Dies hat jedoch den Nachteil, daß lediglich nach der Schmiermittelzufuhr eine gute Schmierungswirkung oder sogar eine Überschmierung erzielt wird, die bis zur nächsten Schmiermittelzufuhr stark abnimmt. Da häufig lediglich sehr geringe Schmiermittelmengen erforderlich sind, ist eine genau dosierte Schmiermittelzufuhr mit diesem Schmierungssystem nicht möglich.

Ein Verfahren zur gezielten Schmiermittelzufuhr bei einem Zweitakt-Verbrennungsmotor ist aus der Veröffentlichung "H. W. Bönsch, Der schnell laufende Zweitakt-Motor, S. 140, Motor Buch Verlag, 1982" bekannt, bei dem jede Kolben/Zylinderrohreinheit über eine Bohrung mittels Drucköl versorgt wird. Die Schmierung der Kurbelwellenlagerung für jeden Zylinder erfolgt ebenfalls über Drucköl. Ein anderes Verfahren zur Schmiermittelversorgung von Kurbelwellenlagern ist in der Veröffentlichung "S.A.E. Paper 85157, 1985" offenbart. Bei diesem Verfahren wird das Schmiermittel durch Unterdruck über Steigleitungen in die jeweiligen Lager gezogen. Um eine sichere Schmierung zu gewährleisten ist weiterhin vorgesehen, daß Luft mittels des im Kolbengehäuse befindlichen Überdrukkes in die Steigleitung geblasen wird. Eine präzise Dosierung der bei den jeweiligen Schmierstellen erforderlichen Schmiermittelmengen ist bei diesen Verfahren nicht möglich.

Aus DE-C-355 070 ist ein Schmierverfahren für einen Verbrennungsmotor bekannt, bei dem in den Spaltzwischenraum zwischen Kolbenund Zylinderwandung Preßluft eingeblasen wird, die als Sperrluft das Eindringen von Spritzöl aus dem Kurbelwellenbereich in den Zylinderbereich verhindern soll. Für die Kolbenschmierung wird gezielt öl in den Preßluftstrom eingegeben und zwar nur so viel, wie durch den Verbrauch benötigt wird.

Aus FR-A-2 531 747 ist es bekannt, mit Hilfe von Preßluft durch Zerstäuberdüsen einen ölnebel über Rillen in der Zylinderwandung, die in etwa in Umfangsrichtung verlaufen, auf den Kolbenmantel aufzubringen.

Diese beiden vorbekannten Verfahren weisen den Nachteil auf, daß keine definierte Durchströmung der Schmierspalte erfolgen kann, weil ein Durchfluß des Trägergases von der jeweiligen, sich infolge Verschleisses ändernden Größe des Schmierspaltes abhängig ist.

Der Erfindung liegt die Aufgabe zugrunde, ein Verfahren und eine Anordnung zum Versorgen der Schmierstellen einer Hubkolbenmaschine zu schaffen, mit dem eine zumindest näherungsweise exakt dosierte und gezielte Schmiermittelzufuhr möglich ist.

Die Aufgabe löst das Verfahren gemäß der Erfindung mit den Verfahrensschritten des Anspruchs 1, bzw. die Anordnung gemäß Anspruch 13.

Dies hat den Vorteil, daß das Schmiermittel zumindest im Bereich der Schmierstelle fein und gleichmäßig verteilt im Transportmedium unter Bildung eines Schmiermittelnebels oder -aerosols vorliegt, der bzw. das die Schmierstelle gleichmäßig benetzt. Der Schmiermitteltransport kann über vorzugsweise als dünne Rohre ausgebildete Zuführleitungen und/oder Zuführbohrungen erfolgen. Der Schmiermitteltransport in den Zuführungen kann dabei auch als Wandfilm erfolgen, wobei die Zerstäubung beispielsweise durch eine Querschnittsverengung der Zuführung in unmittelbarer Nähe der Schmierstelle bewirkt wird.

Die Verwendung eines derartigen Schmiergemisches hat weiterhin den Vorteil, daß dieses leicht zuführ- und dosierbar ist. Ferner wird vermieden, daß die Zuführungen durch Verunreinigungen im Schmiermittel zugesetzt werden. Insbesondere können auch lediglich geringe Mengen Schmiermittel, die für die Schmierwirkung erforderlich sind, in einfacher Weise zugeführt werden. Ein weiterer Vorteil ist darin zu sehen, daß durch dieses Schmiergemisch auch Bereiche der Schmierstelle erreicht werden können, die von der Austrittsöffnung der Zuführung weiter entfernt liegen.

Gemäß einer Ausführungsform der Erfindung ist vorgesehen, daß das Schmiergemisch in Teilströme aufgeteilt wird und daß die unterschiedlichen Dosierungen für die jeweiligen Schmierstellen durch entsprechende Strömungswiderstände in den jeweiligen Zuführungen für die Teilströme bewirkt werden. Es kann auch vorgesehen werden, daß das Schmiermittel und das Transportmedium in mehreren Aufbereitungsvorrichtungen entsprechend den Anforderungen der mit den Aufbereitungsvorrichtungen jeweils in Verbindung stehenden Schmierstellen gemischt werden. Dadurch kann eine individuelle Dosierung der einzelnen Schmierstellen bewirkt werden.

Zweckmäßigerweise erfolgt die Zuführung des Schmiergemisches zu den Schmierstellen kontinuierlich. Dabei kann vorgesehen werden, daß die Dosierung durch Änderung des Volumenstroms des Transportmediums und/oder der Konzentration des Schmiermittels im Transportmedium erfolgt. Es kann aber auch vorgesehen werden, daß die Dosierung durch taktweises Unterbrechen des Volumenstroms des Transportmediums und/oder des Volumenstroms des Schmiermittels erfolgt. Insgesamt ist es dabei zweckmäßig, daß die Dosierung in Abhängigkeit von der Last und/oder der Drehzahl der Hubkolbenmaschine durchgeführt wird.

Ein besonderes Problem bei der Schmierung von Hubkolbenmaschinen stellt die Schmierung der Laufflächen der Kolben/ Zylinderrohreinheit dar. Für die Versorgung dieser Schmierstelle ist gemäß der Erfindung vorgesehen, daß das Schmiergemisch durch wenigstens eine Zuführbohrung in der Zylinderwand in den Zwischenraum zwischen Außenfläche des Kolbens und Innenfläche der Zylinderwand gebracht wird, wobei die Zuführbohrung bei der Stellung des Kolbens im unteren Totpunkt unterhalb des obersten Kolbenringes in den Zwischenraum mündet. Dadurch wird gewährleistet, daß das Schmiergemisch den Kolben größtenteils umspült und das Schmiermittel diesen Bereich der Kolbenaußenfläche und der Innenfläche der Zylinderwand größtenteils benetzt. Dadurch kann in vorteilhafter Weise gewährleistet werden, daß auch bei der Verwendung von einer nur geringen Menge Schmiermittel eine ausreichende Schmierwirkung erzielt wird. Das gasförmige Transportmedium kann dabei durch den Spalt zwischen Kolben und Zylinderwand bei der Aufwärtsbewegung des Kolbens in das Kurbelgehäuse abfließen.

Zur Vermeidung von Mißverständnissen wird an dieser Stelle darauf hingewiesen, daß das Schmiergemisch selbstverständlich im Laufe der Zuführung und Verteilung seine Zusammensetzung ändert. Weiterhin ist es selbstverständlich, daß das abgezogene oder abfließende gasförmige Transportmedium noch mit Schmiermitteln belastet sein kann. Es ist daher im folgenden von einem Schmiergemisch die Rede, wenn es sich um einen zu den Schmierstellen oder deren Bereichen zuströmenden Volumenstrom handelt, während es sich bei dem gasförmigen Transportmedium überwiegend um den aus der Schmierstelle abfließenden Volumenstrom handelt.

Für eine gleichmäßige Verteilung des Schmiermittels auf der Oberfläche des Kolbens oder der Zylinderwand können mehrere derartiger Zuführbohrungen entlang dem Umfang des Zylinderrohres angeordnet sein. Weiterhin kann es zweckmäßig sein, daß die Zylinderwandung wenigstens eine Bohrung zur Abführung des gasförmigen Transportmediums und/oder des überflüssigen Schmiermittels aufweist. Dies ist insbesondere dann zweckmäßig, wenn die Zuführbohrung in einem Bereich der Zylinderwand mündet, der bei der Stellung des Kolbens im unteren Totpunkt zwischen zwei Kolbenringen liegt. Dadurch kann ein einwandfreier Abfluß des gasförmigen Transportmediums bewirkt werden. Die Bohrung für die Abführung des gasförmigen Transportmediums kann dabei in unmittelbarer Nähe oder beispielsweise gegenüber der Zuführbohrung angeordnet sein. Insbesondere in letzterem Fall wird eine ausreichende Umspülung des Kolbens gewährleistet. Zweckmäßig ist es dabei, daß der Abflußquerschnitt größer als der Zuflußquerschnitt ist.

Zur Verbesserung der Verteilung des Schmiergemisches in dem Zwischenraum zwischen Kolben und Zylinderwand kann vorgesehen werden, daß die Mündung der Zuführ- oder Abführbohrung in den Zwischenraum sich in eine Nut erweitert. Ebenso kann in den Kolben eine Nut eingebracht werden, die vorzugsweise in der unteren Totpunktstellung des Kolbens mit der Mündung der Zuführbohrung in der Zylinderwand zusammenwirkt. Die auf der Außenfläche des Kolbens und/oder Zylinderwand angeordneten Nuten können sich beispielsweise über zumindest einen Teilbereich des Umfanges des Kolbens bzw. der Zylinderwand erstrecken. Auch ist es möglich, daß sich die Nuten parallel zur Kolbenachse erstrecken. Weiterhin können die auf der Außenfläche des Kolbens oder der Zylinderwand angeordneten Nuten beispielsweise V-förmig oder kreuzförmig ausgebildet werden. Der Neigungswinkel der Nutachsen zur Zylinderachse kann beispielsweise 45° betragen. Der Vorteil einer solchen Nut-Anordnung liegt darin, daß der Kolbenring punktuell in die Nut ein- und aus der Nut herausläuft. Weiterhin erstreckt sich eine derartige Nut in Umfangsrichtung weniger als eine horizontale Nut, so daß der Kolbenring nicht weit in die Nut eintauchen kann. Dadurch kann der Verschleiß erheblich reduziert werden.

Durch die Anordnung derartiger Nuten kann der Abflußquerschnitt für das gasförmige Transportmedium erhöht und eine erhöhte Schmiermittelnebelzufuhr ermöglicht werden. Dabei kann es vorteilhaft sein, wenn die Nuten im Querschnitt in etwa keilförmig ausgebildet sind, wodurch der Aufbau eines hydrodynamischen Schmierfilms im Bereich des Übergangs der Erweiterung zur Zylinderrohrwand verstärkt wird. Weiterhin wird dadurch bewirkt, daß die Schmiermittelteilchen mit dem abfließenden Transportmedium in den Schmierspalt geführt werden können.

Für eine verbesserte Verteilung des Schmiergemisches kann vorgesehen werden, daß mehrere derartige Zuführ- und/oder Abführbohrungen mit entsprechenden Nutgeometrien entlang dem Umfang der Zylinderwandung angeordnet sind. Weiterhin ist es in Ausgestaltung der Erfindung möglich, daß die Bohrung in eine umlaufende Nut der Zylinderwand mündet, die bei Stellung des Kolbens im unteren Totpunkt unterhalb des untersten Kolbenringes angeordnet ist. Weiterhin kann es zweckmäßig sein, wenn die Bohrung mit wenigstens einer zumindest teilweise umlaufenden Nut auf der Außenfläche des Kolbens zusammenwirkt. Durch diese Maßnahmen kann eine an die Anforderung angepaßte und gleichmäßige Verteilung des Schmiermittels auf den entsprechenden Oberflächen bewirkt werden. Zweckmäßig kann es dabei sein, daß die Nut auf der Oberfläche des Kolbens schraubenförmig verläuft. Das eine Ende der Nut kann dabei im oberen Bereich des Kolbens in einer umlaufenden Nut enden, während das andere Ende in Richtung auf das Kurbelgehäuse offen ist. Damit wird ein ungehinderter Abfluß des gasförmigen Transportmediums gewährleistet. Ebenfalls kann es zweckmäßig sein, mehrere derartiger Nuten auf der Kolbenaußenfläche vorzusehen.

In einer weiteren zweckmäßigen Ausgestaltung der Erfindung ist vorgesehen, daß das Schmiergemisch durch wenigstens eine mit der Zuführbohrung in der Zylinderwand zusammenwirkende Bohrung im Kolben dem oberen Pleuellager zugeführt wird. Damit kann in vorteilhafter Weise eine gezielte und dosierte Schmierung des oberen Pleuellagers, das beispielsweise eine Wälzlagerung aufweist, mit Schmiermittel erfolgen. Die Bohrung im Kolben kann dabei entweder unmittelbar mit der Zuführbohrung oder mittelbar über in der Zylinderwand angeordnete Nuten oder den Nuten auf der Außenfläche des Kolbens mit der Zuführbohrung zusammenwirken. Es kann vorgesehen werden, daß zur Versorgung des oberen Pleuellagers mit Schmiermittel die Nuten auf der Kolbenoberfläche mit ihrem einen Ende am Kolbenbolzenauge auslaufen. Das jeweils andere Ende läuft auf der Außenfläche des Kolbens aus, um einen möglichen Abfluß des Schmiergesmisches zum Kurbelgehäuse zu verhindern. Hierdurch stellt sich eine schmiermittelhaltige Atmosphäre im beispielsweise hohlgebohrten Kolbenbolzen ein. Durch entsprechende Radialbohrungen im Kolbenbolzen kann das Schmiergemisch über das obere Pleuellager abfließen, wodurch die Schmiermittelversorgung des Lagers sichergestellt wird. Dabei kann es zweckmäßig sein, daß die Nuten schraubenförmig auf der Oberfläche des Kolbens angeordnet sind, wobei jeweils das eine Ende jeweils in eine mit dem Pleuellager in Verbindung stehende Radialbohrung mündet, während das andere Ende auf der Kolbenoberfläche ausläuft, damit eine ausreichende Schmiermittelversorgung des oberen Pleuellager gewährleistet wird.

Es ist selbstverständlich auch möglich, daß mit diesem Verfahren auch die anderen Schmierstellen einer Hubkolbenmaschine mit Schmiermittel versorgt werden können. Dabei kann vorgesehen werden, daß die Lagerungen der Kurbelwelle im Kurbelgehäuse durch entsprechende Bohrungen im Maschinenblock erfolgt. Die Schmierung der Lagerungen der Pleuel auf der Kurbelwelle kann durch entsprechende Bohrungen in der Kurbelwelle erfolgen. Weiterhin kann vorgesehen werden, daß das Schmiermittel durch eine entsprechende Bohrung im Pleuellager auf der Kurbelwelle und eine entsprechende Bohrung im Pleuel zu dem oberen Pleuellager geführt wird.

Es kann zweckmäßig sein, daß das Schmiergemisch unter Druck den jeweiligen Schmierstellen zugeführt wird. Dazu kann ein externer Kompressor vorgesehen werden. Auch kann dazu der im Kurbelgehäuse bzw. im Arbeitsraum der Hubkolbenmaschine herrschende Überdruck herangezogen werden. Das gasförmige Transportmedium und/oder das überflüssige Schmiermittel wird zweckmäßigerweise durch Anlegen eines Unterdruckes an die entsprechenden Abführbohrungen von der Schmierstelle abgezogen. Bei dieser Verfahrensführung, nämlich dem Zuführen des schmiermittelhaltigen Transportmediums unter Druck einerseits und dem Abziehen des gasförmigen Transportmediums ggf. mit überschüssigem Schmiermittel mittels Unterdruck andererseits ist es möglich, beispielsweise Wälzlager ausreichend und gezielt mit Schmiermittel zu versorgen.

In besonders vorteilhafter Weise kann dieses Verfahren für die Versorgung von Zweitakt-Verbrennungsmotoren angewendet werden, da damit der erforderliche Schmiermittelverbrauch erheblich reduziert werden kann. Weiterhin kann es zweckmäßig sein, daß für die Gewährleistung der Funktionssicherheit des Schmiersystems bei tiefen Temperaturen die Beheizung des Schmiermittels und/oder des gasförmigen Transportmediums innerhalb der Schmiermittelaufbereitungsvorrichtung und/oder der Transportleitungen erfolgt. Ferner kann im Dauerbetrieb eine Kühlung des Volumenstroms des Transportmediums oder des Schmiermittels zweckmäßig sein.

Die Erfindung wird nun anhand der Zeichnung näher erläutert. Es zeigen:
- Fig. 1: im Schema eine Hubkolbenmaschine mit einer Schmiermittelversorgung gemäß der Erfindung,
- Fig. 2: im Schnitt und in vergrößerter Darstellungsform die Schmiermittelzufuhr in dem Zwischenraum zwischen Zylinderwandung und Kolben einer Zylinder/Zylinderrohreinheit,
- Fig. 3: im Schnitt eine andere Ausführungsform der Schmiermittelzuführung,
- Fig. 4: einen Schnitt entlang der Linie IV-IV gemäß Fig. 3,
- Fig. 5: die Ansicht in Richtung des Pfeiles V gemäß Fig. 3, jedoch ohne Kolben,
- Fig. 6: eine andere Ausführungsform der Schmiermittelzufuhr,
- Fig. 7: im Schnitt die Schmiermittelzufuhr für das obere Pleuellager,
- Fig. 8: eine andere Ausführungsform der Schmiermittelzufuhr für das oberen Pleuellager,
- Fig. 9: im Schnitt die Schmiermittelzufuhr für ein Wälzlager,
- Fig. 10: im Schnitt eine andere Ausführungsform einer Schmiermittelzufuhr in einen Schmierspalt,
- Fig. 11: die Schmiermittelzufuhr in Form des Wandfilmtransports,
- Fig. 12: die Ansicht einer Nutausführung in der Zylinderwand bzw. am Kolben,
- Fig. 13: die Ansicht einer anderen Nutausführung in der Zylinderwand bzw. am Kolben,
- Fig. 14: eine weitere Nutausführung, dargestellt an einer Abwicklung der Kolbenaußenfläche, Kolbenstellung im oberen Totpunkt, zugehörige Zylinderwandung angedeutet,
- Fig. 15: die Nutausführung gem. Fig. 14 in einer mittleren Kolbenstellung,
- Fig. 16: eine Abwandlung der Nutausführung gem. Fig. 14, Kolbenstellung im oberen Totpunkt,
- Fig. 17: die Nutausführung gem. Fig. 16 in einer mittleren Kolbenstellung,
- Fig. 18: eine Ausführungsform für die Schmiergemischerzeugung und Schmiergemischzuführung,
- Fig. 19: Schema einer Schmiermittelversorgung für einen Zweitakt-Verbrennungsmotor.

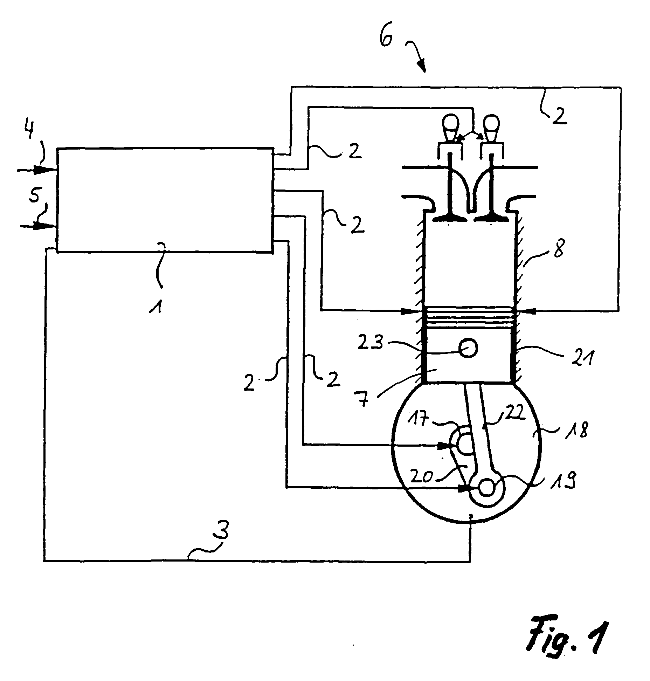

Das in Fig. 1 schematisch zur Anwendung an Hubkolbenmaschinen dargestellte Schmierverfahren weist eine Aufbereitungseinrichtung 1 für das Schmiergemisch, Transportleitungen 2 zu den Schmierstellen der Hubkolbenmaschine 6 und eine Leitung 3 zum Rückführen des nicht verbrauchten Schmiermittels auf. Die Aufbereitungseinrichtung 1 ist mit je einem Anschluß 4, 5 für das gasförmige Transportmedium bzw. für das flüssige Schmiermittel sowie einen Anschluß für die Rückleitung 3 versehen. Die Bereitstellung des gasförmigen Transportmediums, beispielsweise Luft, erfolgt durch einen in der Zeichnung nicht dargestellten externen Kompressor oder durch Verdichtung im Kurbelgehäuse oder im Arbeitsraum der Hubkolbenmaschine. Das flüssige Schmiermittel kann beispielsweise aus einem in der Zeichnung nicht dargestellten Speicher entnommen werden.

In der Aufbereitungseinrichtung 1 wird das flüssige Schmiermittel mit dem gasförmigen Transportmedium unter Bildung eines Schmiergemisches zusammengeführt. Weiterhin kann vorgesehen werden, daß das rückgeführte Schmiermittel gereinigt und ggf. unter Zusatz von frischem Schmiermittel dem gasförmigen Transportmedium zugesetzt wird. Das Schmiergemisch gelangt über die Transportleitungen 2, die vorzugsweise als dünne Rohre und/oder dünne Bohrungen ausgebildet sind, zu den jeweiligen Schmierstellen.

Der Transport des flüssigen Schmiermittels mittels des gasförmigen Transportmediums kann dabei durch unterschiedliche Mechanismen erfolgen. Ein möglicher Transportmechanismus stellt die Zerstäubung des Schmiermittels zu kleinen Tropfen dar, die von dem gasförmigen Transportmedium zu der Bedarfsstelle getragen werden. Die Tropfen haben dabei eine Größenordnung von etwa 1µm. Bei diesem Transportmechanismus muß durch eine besondere Ausbildung des der Schmiermittelstelle zugewandten Endes der Transportleitungen und/oder Bohrungen gewährleistet werden, daß sich die Tropfen an der Schmierstelle ablagern. Dies kann beispielsweise dadurch erfolgen, daß über eine Querschnittsverengung eine Erhöhung der Strömungsgeschwindigkeit bewirkt wird und durch eine anschließende Umlenkung der Strömung die Anlagerung der schwereren Schmiermitteltropfen an der zu schmierenden Oberfläche gewährleistet wird. Eine andere Möglichkeit, die Schmiermittelteilchen abzulagern besteht darin, unmittelbar vor der Schmierstelle eine Querschnittsverengung in Form eines porösen Körpers, beispielsweise aus gasdurchlässiger Keramik, einzubringen, wodurch sich innerhalb dieser Querschnittsverengung starke Strömungsumlenkungen ergeben, die zu einem Tropfenwachstum führen. Diese größeren Tropfen können sich aufgrund ihrer Trägheit problemlos an der Schmierstelle ablagern.

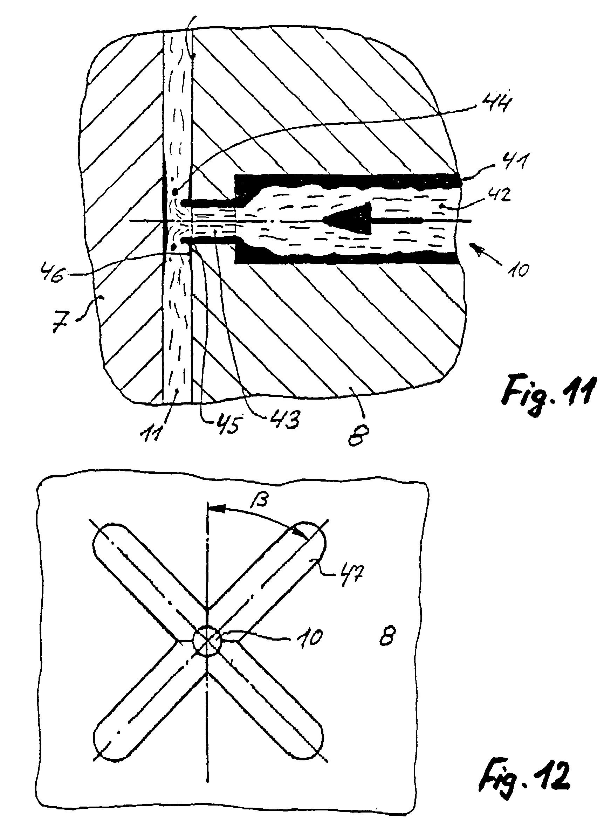

Bei einem anderen Transportmechanismus, der in Fig. 11 dargestellt ist, wird innerhalb der Transportleitungen 2 ein Schmiermittelwandfilm 41 gebildet, der vom durchströmenden gasförmigen Transportmedium 42 mitgerissen wird. Die Zerstäubung des flüssigen Wandfilms zu Tropfen erfolgt hierbei durch eine Querschnittsverengung 43 unmittelbar vor oder in unmittelbarer Nähe der Schmierstelle. Dabei werden Tropfen 44 in einer Größe erzeugt, die sich an der zu schmierenden Oberfläche aufgrund ihrer Größe und ihrer Trägheit ablagern können. Durch eine entsprechende Ausbildung des Endes 45 der Querschnittsverengung zur Innenfläche 26 der Zylinderwand 8, beispielsweise durch eine Abrundung, kann die Ausbildung eines Schmiermittelwandfilms 46 an der zufuhrseitigen Wand der Schmierstelle erreicht werden.

Bei dem in der Fig. 1 dargestellten Ausführungsbeispiel werden die Schmierstellen der Hubkolbenmaschine durch eine einzige Aufbereitungseinrichtung 1 mit dem Schmiergemisch versorgt. Da die einzelnen Schmierstellen in der Regel einen unterschiedlichen Bedarf von Schmiermitteln aufweisen, kann es zweckmäßig sein, daß die jeweiligen Transportleitungen unterschiedliche Strömungswiderstände oder unterschiedliche, kalibrierte Austrittsöffnungen und/oder Bohrungen aufweisen, so daß der Gesamtvolumenstrom entsprechend den Anforderungen aufgeteilt und jede Schmierstelle mit der jeweils erforderlichen Schmiermittelmenge versorgt wird. Weiterhin kann vorgesehen werden, daß mehrere Aufbereitungseinrichtungen vorgesehen werden, die jeweils bestimmte Schmierstellen der Hubkolbenmaschine versorgen.

Bei der Hubkolbenmaschine 6 müssen insbesondere die Kurbelwellenhauptlager 17, die Kurbelwellenpleuellager 19 und die Laufflächen der Kolben/Zylinderrohreinheit 21 sowie das obere Pleuellager 23 im Kolben 7 mit Schmiermittel versorgt werden. Die Versorgung der Kurbelwellenhauptlager 17 kann dabei über Transportleitungen und entsprechende Bohrungen im Motorblock 18 erfolgen. Die Kurbelwellenpleuellager 19 können über entsprechende Bohrungen innerhalb der Kurbelwelle 20 mit Schmiermittel versorgt werden.

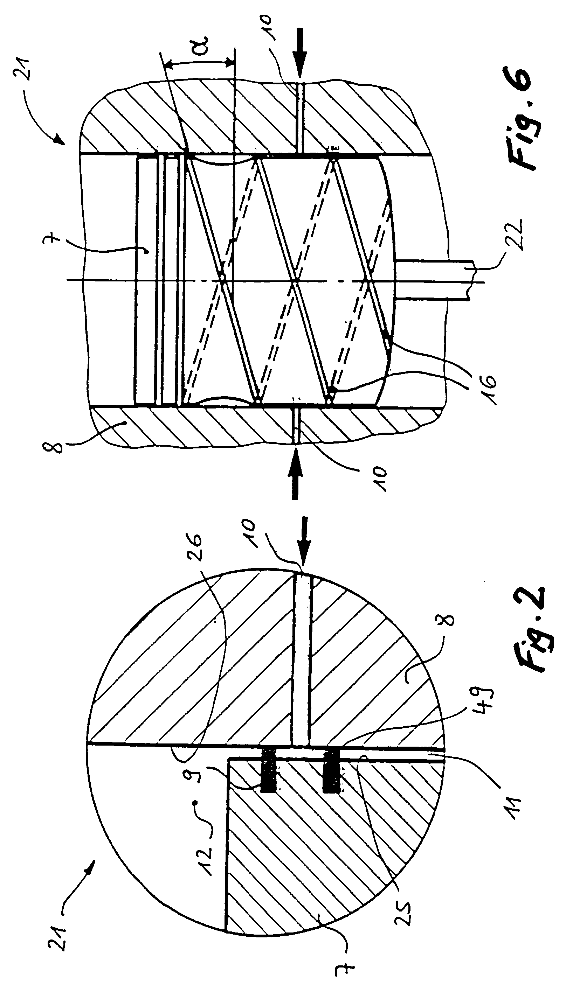

In Fig. 2 ist eine Möglichkeit für die Schmiermittelversorgung der Kolben/Zylinderrohreinheit 21 dargestellt. Die Zylinderwand 8 weist eine oder mehrere am Umfang verteilte Zuführbohrungen 10 auf, die in den Zwischenraum 11 zwischen Kolben 7 und Zylinderwand 8 münden. Diese Bohrungen 10 sind vorteilhafterweise in einem Bereich der Zylinderwandung angeordnet, der immer vom Kolben 7 während dessen Hubbewegung überdeckt ist. Um Schmiermittelverluste zum Brennraum 12 zu vermeiden, sind die Bohrungen 10 so angeordnet, daß sie bei der Stellung des Kolbens 7 im unteren Totpunkt unterhalb des obersten Kolbenringes 9 liegen. Diese Stellung des Kolbens ist in Fig. 2 dargestellt. Das Schmiergemisch gelangt über die Bohrung 10 in den Spalt (11) zwischen Kolben 7 und Zylinderwand 8 und umspült den Kolben vollständig. Dabei werden sich die Schmiermitteltropfen auf der Außenfläche 25 des Kolbens 7 und der Innenfläche (26) der Zylinderwand 8 ablagern und den für die Schmierung der Laufflächen erforderlichen Schmierfilm bilden. Das gasförmige Transportmedium kann dabei über den Spalt 11 zwischen Kolben 7 und Zylinderwand 8 abfließen. Dazu kann es zweckmäßig sein, eine Nut in der Zylinderwand 8 zur Umgehung der unteren Kolbenringe 49 vorzusehen.

Im allgemeinen weist der Kolben 7 mehrere Kolbenringe auf, die dichtend an der Zylinderwand 8 anliegen. Um eine ausreichende Umspülung des Kolbens auch in dem Bereich der Kolbenringe zu gewährleisten, kann es zweckmäßig sein, daß die Zylinderwandung im Bereich der Zuführbohrungen ebenfalls Bohrungen für den Abfluß des gasförmigen Transportmediums aufweist. Damit ist sichergestellt, daß das gasförmige Transportmedium auch dann abfließen kann, wenn es in den durch die Kolbenringe begrenzten Ringraum geleitet wird. Dabei wird ausreichend Schmiermittel mitgeführt, das sich in diesem Bereich auf der Außenfläche 25 des Kolbens 7 und der Innenfläche 26 der Zylinderwand 8 ablagern kann, so daß der für die Schmierung erforderliche Schmiermittel film aufgebaut werden kann. Der Querschnitt der Abflußbohrungen sollte dabei größer als der Querschnitt der Zuführbohrungen sein.

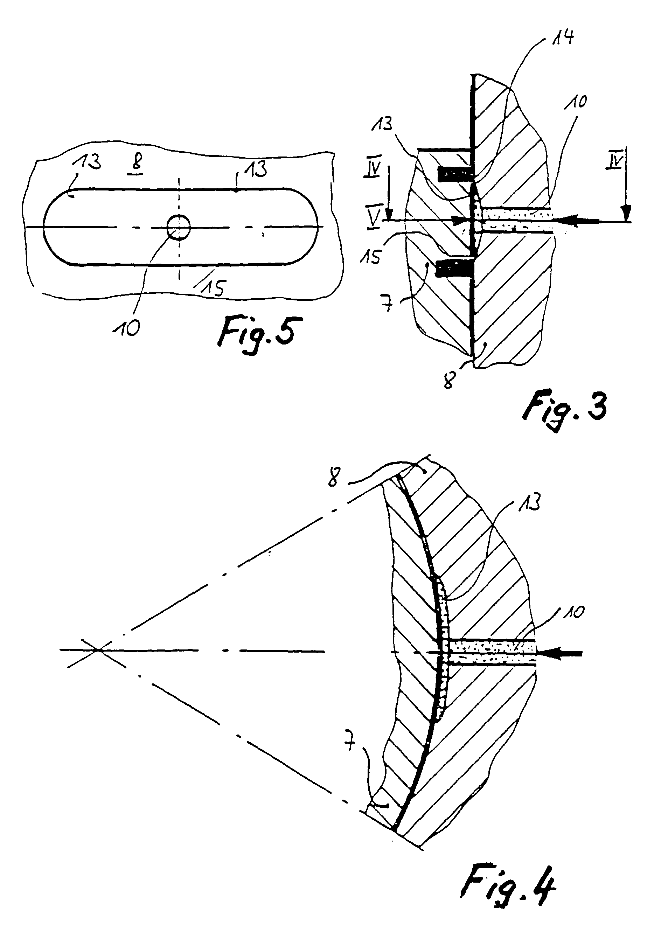

In den Fig. 3 bis 5 ist eine andere Ausführungsform der Zuführung des schmiermittelhaltigen Transportmediums in den Zwischenraum 11 der Kolben/Zylinderrohreinheit 21 dargestellt. Die Zuführbohrung 10 mündet dabei in eine sich zumindest teilweise über den Umfang der Zylinderwand 8 erstreckenden Nut 13. Damit kann der Abflußquerschnitt für das gasförmige Transportmedium erhöht werden. Der Querschnitt der Nut ist vorzugsweise in etwa keilförmig ausgebildet, wodurch der Aufbau eines hydrodynamischen Schmierfilms an der Nutoberseite 14 bzw. Nutunterseite 15 in Abhängigkeit von der Kolbenbewegung unterstützt wird. Bei dem in den Fig. 3 bis 5 dargestellten Ausführungsbeispiel ist die Nut 13 quer zur Kolbenbewegung ausgerichtet und weist in Umfangsrichtung der Zylinderwand 8 eine im wesentlichen ovale Form auf. Je nach Anforderung kann es zweckmäßig sein, daß die Nut sich zumindest teilweise parallel zur Kolbenbewegung erstreckt.

Die in Fig. 3 dagestellte Nut 13 kann sich auch über den gesamten Umfang der Zylinderwand 8 erstrecken. Dabei ist es zweckmäßig, daß mehrere Zuführbohrungen 10 vorgesehen werden. Bei dieser Ausführungsform mit einer umlaufenden Nut muß darauf geachtet werden, daß bei Stellung des Kolbens 7 im unteren Totpunkt die Nut unterhalb des untersten Kolbenringes angeordnet ist. Weiterhin kann es zweckmäßig sein, daß in die umlaufende Nut eine oder mehrere Bohrungen zur Abführung des gasförmigen Transportmediums münden.

Grundsätzlich können die Zuführbohrungen 10 bei Verbrennungsmotoren, insbesondere Viertakt-Verbrennungsmotoren, an beliebigen Stellen des Umfanges in die Zylinderwand unterhalb des obersten Kolbenringes 9 bei der unteren Totpunktstellung des Kolbens 7 münden. Es ist dabei zweckmäßig, diese in den tragenden Zonen, also auf der Druckseite und Gegendruckseite des Kolbens 7, anzuordnen. Bei Zweitakt-Verbrennungsmotoren mit Einlaß- und Auslaßschlitzen ist es zweckmäßig, die Zuführbohrungen 10 in Umfangsrichtung zwischen dem Einlaß- und dem Auslaßschlitz des Brennraumes und unterhalb des obersten Kolbenringes 9 bei der Kolbenstellung im unteren Totpunkt anzuordnen. Die Zuführbohrung 10 ist in zweckmäßiger Weise bei der Stellung des Kolbens 7 im unteren Totpunkt möglichst unmittelbar unterhalb des obersten Kolbenringes 9 angeordnet, um bei der Aufwärtsbewegung des Kolbens 7 einen möglichst großen Abschnitt der Kolbenaußenfläche 25 mit Schmiermittel zu versorgen. Weiterhin können auch mehrere Zuführbohrungen in einem parallel zur Zylinderachse verlaufenden Abstand zueinander angeordnet sein.

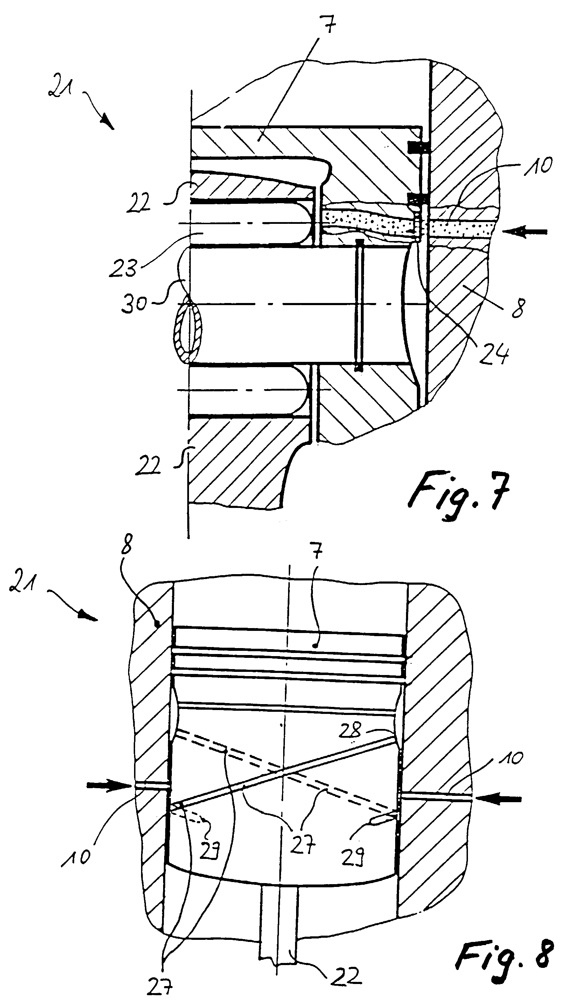

Eine weitere Möglichkeit der Schmiermittelversorgung der Laufflächen der Kolben/Zylinderrohreinheit 21 ist in Fig. 6 dargestellt. Hierbei weist der Kolben 7 auf seiner Außenfläche 25 schraubenförmige Nuten 16 auf, wodurch eine gute Verteilung des Schmiergemisches und somit des Schmiermittels am Kolbenumfang erreicht wird. Die Nuten enden bei dem in Fig. 6 dargestellten Ausführungsbeispiel an der Unterseite des Kolbens 7, wodurch der ungehinderte Abfluß des gasförmigen Transportmediums zum Kurbelgehäuse sichergestellt werden kann. Der Steigungswinkel α der schraubenförmigen Nuten 16 muß dabei entsprechend den Anforderungen gewählt werden. Es kann auch vorgesehen werden, daß auf der Außenfläche des Kolbens 7 eine oder mehrere umlaufende Nuten angeordnet sind, die mit der Zuführbohrung 10 zusammenwirken. Auch dadurch kann eine gute Verteilung des Schmiermittels am Kolbenumfang bewirkt werden, wobei das gasförmige Transportmedium durch den Spalt 11 zwischen Kolben 7 und Zylinderwand 8 abfließen kann. Die Nuten 16 wirken dabei mit der Zuführbohrung 10 zweckmäßigerweise in der unteren Totpunktstellung des Kolbens 7 zusammen.

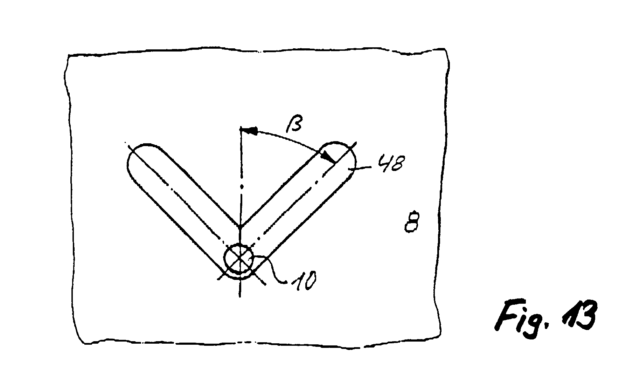

Andere Ausführungsformen derartiger auf der Außenfläche 25 des Kolbens 7 und/oder Innenfläche 26 der Zylinderwand 8 angeordnete Nuten sind in Fig. 12 und 13 dargestellt. Die Nuten 48, 47 können V-förmig (Fig. 13) oder kreuzförmig (Fig. 12) ausgebildet sein. Der Neigungswinkel β der Nutachsen zur Zylinderachse kann beispielsweise in etwa 45° betragen. Der Vorteil einer solchen Nutanordnung im Zylinderrohr liegt darin, daß die Kolbenringe punktuell in die Nut ein- und aus der Nut herauslaufen. Weiterhin erstreckt sich die Nut in Umfangsrichtung weniger als eine horizontale Nut, so daß der Kolbenring nicht weit in die Nut eintauchen kann. Weiterhin kann vorgesehen werden, daß die Nuten 16, 27, 47, 48 eine Querschnittsabmessung aufweisen, die gleich oder nur geringfügig größer als der Querschnitt der Zuführbohrung 10 ist.

In den Fig. 7 und 8 sind Möglichkeiten zur Schmiermittelversorgung des oberen Pleuellagers 23 dargestellt. Bei dem in Fig. 7 dargestellten Ausführungsbeispiel weist der Kolben 7 im oberen Bereich wenigstens eine im wesentlichen radial verlaufende Bohrung 24 auf, die mit ihrem einen Ende in die Außenfläche 25 des Kolbens 7 mündet. Die Mündung der Bohrung 24 liegt vorteilhaft versetzt in Umfangsrichtung, beispielsweise senkrecht zum Kolbenbolzen 30. Das andere Ende der Bohrung 24 ist auf das obere Pleuellager 23 gerichtet, das bei dem in der Zeichnung dargestellten Ausführungsbeispiel als Wälzlager ausgebildet ist. Die Bohrung 24 wirkt mit der in der Zylinderwand 8 angeordneten Zuführbohrung 10 zusammen. Zweckmäßig ist es dabei, daß die Zuführung des Schmiergemisches in die Bohrung 24 in der Stellung des Kolbens 7 im unteren Totpunkt erfolgt, da dort der Kolben 7 relativ lange verweilt. Weiterhin kann es zweckmäßig sein, daß zumindest die Mündung der Bohrung 24 auf der Außenfläche 25 des Kolbens 7 einen größeren Durchmesser als die Zuführbohrung 10 aufweist, um sicherzustellen, daß ausreichend Schmiermittel dem oberen Pleuellager 23 zugeführt wird. Ebenfalls kann es zweckmäßig sein, wenn die Bohrung 24 in eine sich parallel zur Kolbenbewegung erstreckende Nut mündet, so daß die Zuführung des Schmiermittels über einen bestimmten Bewegungsabschnitt des Kolbens 7 gewährleistet ist. Der Übersichtlichkeit halber sind in der Zeichnung die Bohrung 24 und die Zuführbohrung 10 in Umfangsrichtung versetzt in der Ebene des Kolbenbolzens 30 dargestellt.

In Fig. 8 ist eine andere Möglichkeit zur Versorgung des oberen Pleuellagers 23 mit Schmiermittel dargestellt. Bei dieser Ausführungsform sind auf der Außenfläche 25 des Kolbens 7 schraubenförmige Nuten 27 angeordnet. Die Nuten 27 enden mit ihrem einen Ende am Kolbenbolzenauge 28. Die anderen Enden 29 der Nuten 27 laufen auf der Außenfläche 25 des Kolbens 7 aus, um einen möglichen Abfluß des Schmiergemisches zum Kurbelgehäuse zu verhindern. Durch entsprechende Radialbohrung im Kolbenbolzen 30 kann sichergestellt werden, daß das Transportmedium, das zumindest teiweise noch mit flüssigem Schmiermittel belastet ist, zum oberen Pleuellager 23 geführt wird. Diese Schmiermittelmenge ist ausreichend, um das obere Pleuellager 23 zu schmieren. Die Nuten 27 wirken dabei in zweckmäßiger Weise mit der Zuführbohrung 10 in der unteren Totpunktstellung des Kolbens 7 zusammen.

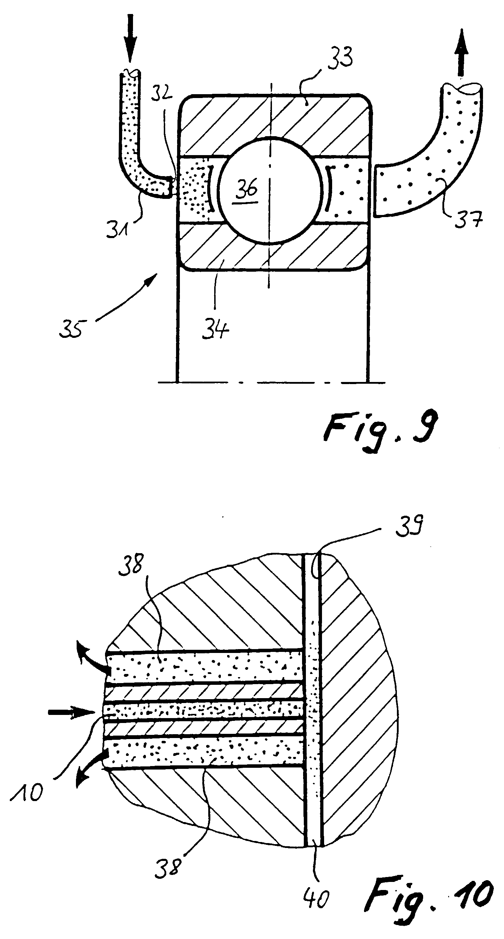

In Fig. 9 ist die Möglichkeit der Versorgung eines Wälzlagers mit Schmiermittel dargestellt. Wälzlager werden häufig für die Kurbelwellenhauptlagerung und die Kurbelwellenpleuellagerung bei Zweitakt-Verbrennungsmotoren eingesetzt. Die Anordnung für die Schmiermittelzufuhr weist eine Zuführleitung 31 auf, die mit ihrer Austrittsöffnung 32 im Bereich zwischen dem äußeren und dem inneren Laufring 33 bzw. 34 des Wälzlagers 35 endet. Das unter Druck zugeführte Schmiergemisch gelangt auf die Wälzkörper 36. Das nicht abgelagerte Schmiermittel wird über eine auf der anderen Seite des Wälzlagers 35 angeordnete Ansaugleitung 37 aufgefangen. Dadurch wird sichergestellt, daß überschüssiges Schmiermittel unmittelbar der Schmiermittelaufbereitung wieder zugeführt werden kann, ohne zunächst beispielsweise in das Kurbelgehäuse zu gelangen.

In vorteilhafter Weise ist die Absaugleitung mit Unterdruck beaufschlagt. Derartige Absaugleitungen können beispielsweise auch in unmittelbarer Nähe einer Zuführbohrung 10 für das schmiermittelhaltige Transportmedium angeordnet sein. In Fig. 10 ist die Zuführbohrung 10 zwischen zwei Absaugleitungen 38 angeordnet. Beim Auftreffen des Schmiergemisches auf die Oberfläche 39 wird sich ein gewisser Anteil des Schmiermittels dort ablagern, ein gewisser Anteil wird sich mittels des Transportmediums innerhalb des Schmierspaltes 4o verteilen und die Oberfläche 39 großflächig benetzen, während der überschüssige Anteil des Schmiermittels zusammen mit dem gasförmigen Transportmedium durch die Absaugleitungen 38 abgeführt wird. Auch hier kann es zweckmäßig sein, wenn die Absaugleitungen 38 mit Unterdruck beaufschlagt sind. Neben der Anordnung mehrerer separater Absaugleitungen kann auch eine konzentrische Ringleitung vorgesehen werden.

Es ist offensichtlich, daß mit diesem Schmierungssystem eine gezielte Schmiermittelversorgung bei gleichzeitig geringem Schmiermittelverbrauch erreicht wird. Insbesondere können die kritischen Schmierstellen, nämlich die Laufflächen der Kolben/Zylinderrohreinheit einerseits und das obere Pleuellager andererseits - beispielsweise eines Verbrennungsmotors - gezielt und ausreichend mit Schmiermitteln versorgt werden. Weiterhin ist die Verwendung dieses Schmiersystems auch bei Zweitakt-Verbrennungsmotoren mit Kurbelkastenspülung besonders vorteilhaft.

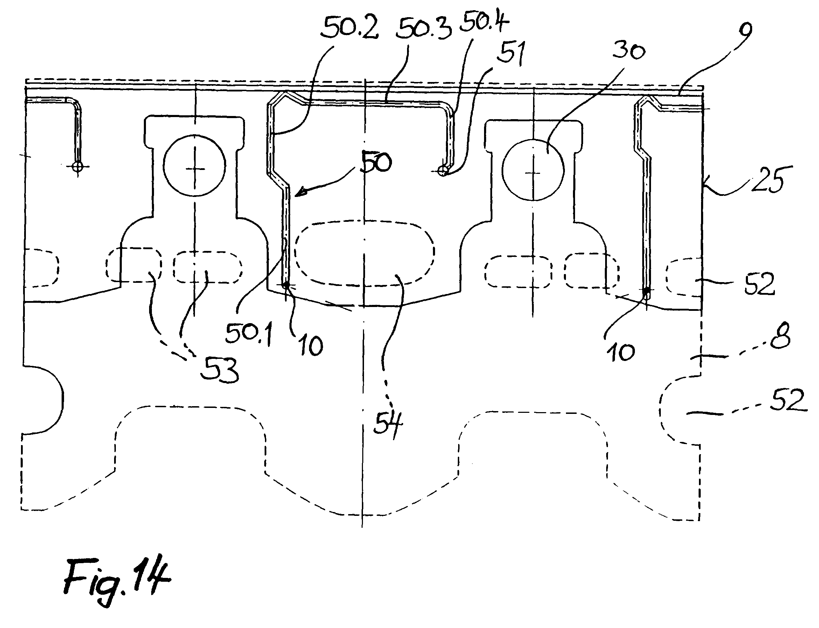

Fig. 14 zeigt ein weiteres Ausführungsbeispiel für die Nutausführung anhand einer Abwicklung der Kolbenaußenfläche (vollausgezogene Linie) und zwar in ihrer Zuordnung zur zugehörigen Zylinderwandfläche 8 (gestrichelte Linien), und zwar in der oberen Totpunktstellung für einen Zweitakt-Verbrennungsmotor. Die Lage des Kolbenbolzens 30 in bezug zur Kolbenaußenfläche 25 ist angedeutet.

Wie die Abwicklung der Kolbenaußenfläche 25 in Fig. 14 erkennen läßt, ist auf den beiden zwischen den Kolbenbolzen aufliegenden Flächenbereichen jeweils eine Nut 50 angeordnet, die im wesentlichen aus einem vom unteren Kolbenende ausgehenden axialen Nutteil 50.1, einen daran im oberen Kolbenbereich radial versetzt angeordneten Nutteil 50.2 sowie einen daran anschließenden, in Kolbenumfangsrichtung verlaufenden Nutteil 50.3 besteht. Hieran anschließend geht dann der in Umfangsrichtung verlaufende Nutteil 50.3 in einen wieder axial zum unterem Kolbenende ausgerichteten Nutteil 50.4 über, an den sich eine Durchgangsbohrung 51 anschließt, über die der Nutteil 50.4 mit dem Kolbenbolzenlager in Verbindung steht.

In der Zylinderwand 8 sind zwei diametral gegenüberliegende Zuführbohrungen 10 angeordnet, die bei der in Fig. 14 dargestellten oberen Totpunktstellung des Kolbens am unteren Ende des axialen Nutteils 50.1 in diesen ausmünden. Bei dieser Kolbenstellung sind die in der Zylinderwandung 8 angeordnete Einlaßöffnung 52, die Überströmöffnungen 53 sowie die Gasauslaßöffnung 54 von der Kolbenaußenwand 25 abgedeckt. Das über die Zuführbohrungen 10 zugeführte Schmiergemisch kann über die Nut 50 hierbei bis zur Durchtrittsbohrung 51 während der Abwärtsbewegung des Kolbens durch die Nut 50 strömen.

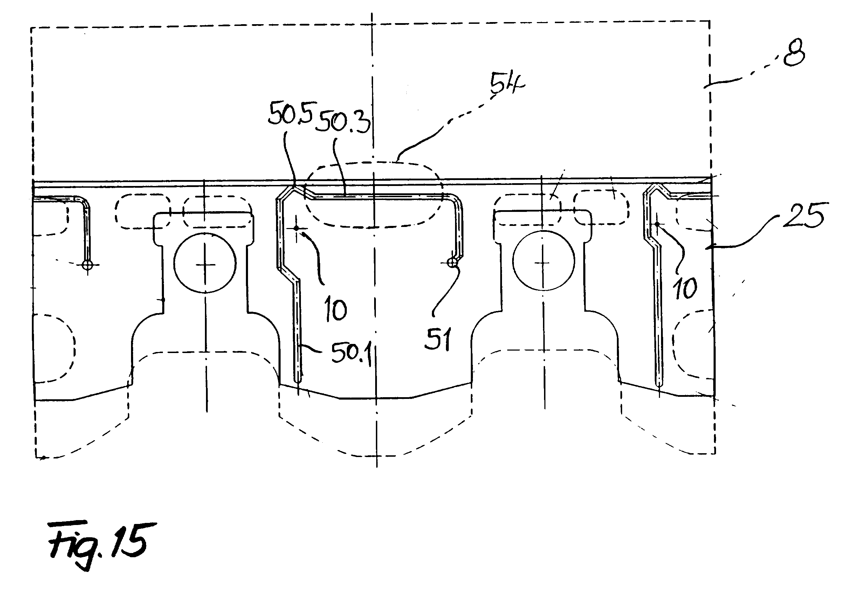

Um nun den Austritt von Schmiermittel aus dem Gasaulaß 54 auf ein Minimum zu reduzieren, ist durch die versetzte Anordnung des Nutteils 50.2 gegenüber dem Nutteil 50.1 dafür Sorge getragen, daß bei Erreichen einer mittleren Kolbenstellung, wie in Fig. 15 dargestellt, die Zuführbohrungen 10 von der Kolbenaußenfläche 25 über einen Teil des Kolbenhubes überdeckt werden, so daß während dieser Phase die Schmiermittelzufuhr in die Nut 50 unterbrochen ist. Durch eine entsprechende Gestaltung des in Umfangsrichtung verlaufenden Nutteils 50.3 im Übergangsbereich zwischen dem oberen axial verlaufenden Nutteil 50.2 und dem Nutteil 50.3 kann nun erreicht werden, daß bei Erreichen der unteren Totpunktstellung für einen kurzen Zeitpunkt dieser Übergangsbereich 50.5 die Zufuhrbohrung überdeckt, so daß im Bereich der Bewegungsumkehr kurzzeitig Schmiergemisch zugeführt wird. Der in Umfangsrichtung verlaufende Nutteil 50.3 ist hierbei in bezug auf den Kolbenring 9 so angeordnet, daß die Überdeckung des Bereiches 50.5 mit der Zuführbohrung 10 erst dann erfolgt, wenn der in Umfangsrichtung verlaufende Bereich 50.3 unterhalb seiner Überdeckung mit dem Auslaßkanal 54 liegt. Sobald sich der Kolben wieder in der Aufwärtsbewegung befindet, wird kurzfristig die Zuführbohrung 10 verschlossen und die Schmiergemischzufuhr unterbrochen.

Wie Fig. 15 ferner erkennen läßt, kann der obere axial verlaufende Nutteil 50.2 der dem Gasauslaßkanal 54 zugeordneten Nut 50 etwas länger ausgestaltet sein als der entsprechende Bereich auf der Kolbenaußenwand, die den Gaseinlaßkanälen 52 zugeordnet ist, so daß auf dieser Seite über einen etwas längeren Zeitraum die Zufuhr von Schmiergemisch erfolgt.

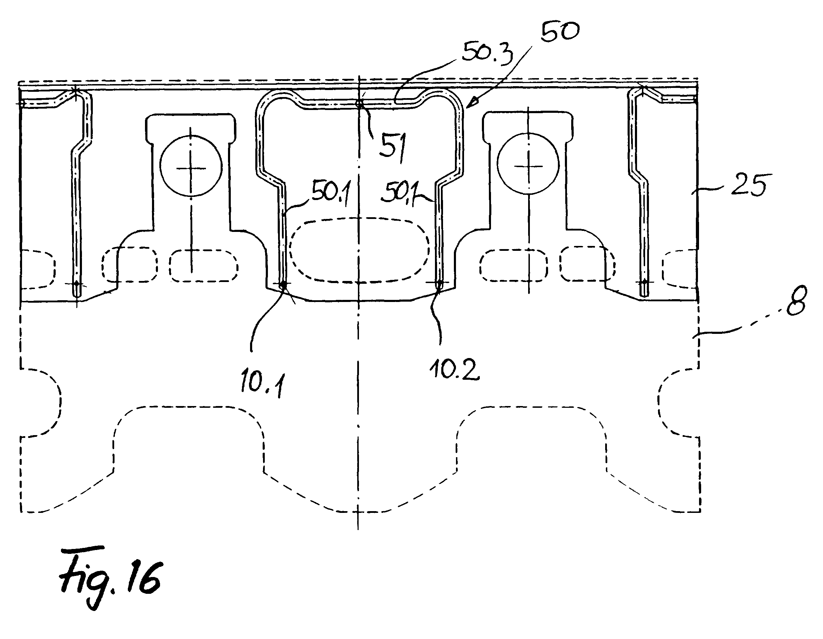

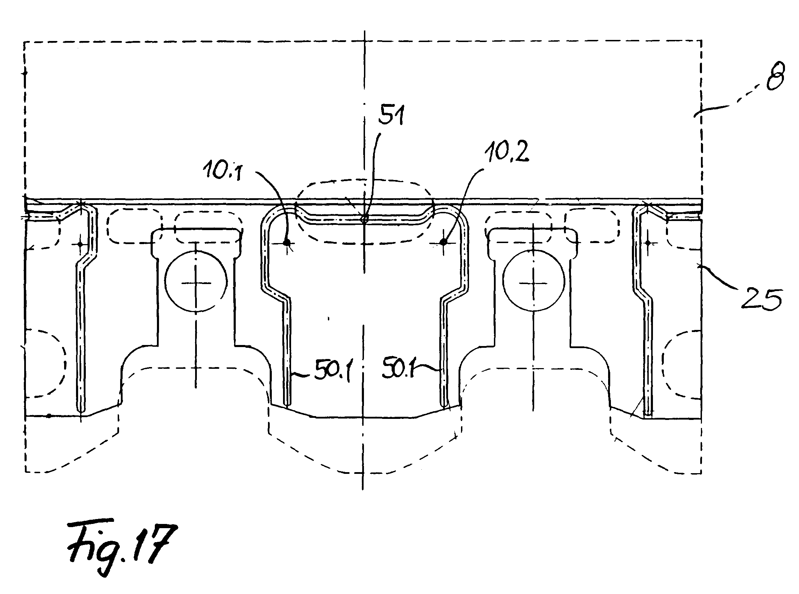

In Fig. 16 und 17 ist in einer den Fig. 14 und 15 entsprechenden Darstellung eine andere Ausführungsform für die Nut 50 dargestellt. Aufbau und Funktionsweise entsprechen im wesentlichen der Ausführungsform gem. Fig. 14 und 15. Der Unterschied besteht jedoch darin, daß die Nut 50 im wesentlichen U-förmig auf der Kolbenaußenfläche 25 angeordnet ist und daß je Nut jeweils zwei Zuführungsbohrungen 10.1 und 10.2 vorgesehen sind, die jeweils im unteren Endbereich des axial verlaufenden Nutteils 50.1 ausmünden. Die mit dem Kolbeninnenraum, vorzugsweise dem Kolbenbolzenlager in Verbindung stehende Durchgangsbohrung 51 ist bei dieser Ausgestaltung im Mittenbereich des in Umfangsrichtung verlaufenden Nutteils 50.3 angeordnet.

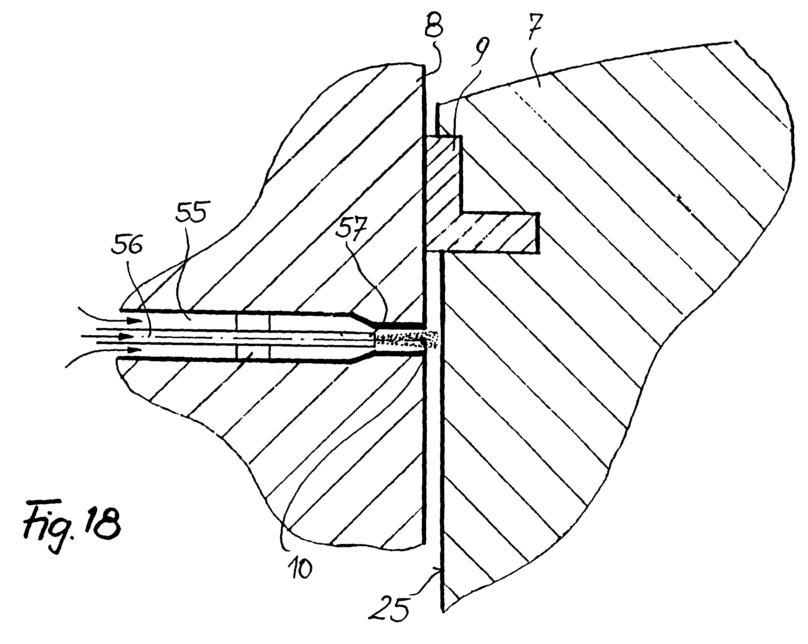

Fig. 18 zeigt in einem vergrößerten Vertikalschnitt eine Ausgestaltung für die Bildung und Zuführung des Schmiergemisches unmittelbar im Zylinderbereich. Hierbei ist die Zuführöffnung 10 in der Zylinderwandung 8 mit einem Zuleitungskanal 55 für die Zufuhr eines gasförmigen Trägermediums verbunden, der über entsprechende Zuleitungen mit einer Versorgung in Verbindung steht. Der Zuleitungskanal 55 weist einen größeren Durchmesser als die Zuführöffnung 10 auf. In diesen Zuleitungskanal 55 ist ein Zuleitungsrohr 56 vorzugsweise koaxial eingeführt, dessen Austrittsöffnung 57 in dem Bereich des Zuleitungskanals 55 ausmündet, in dem sich der Durchmesser des Zuleitungskanals 55 auf den Durchmesser der Zuführöffnung 10 vermindert. Auch die Zuleitung 56 steht mit einer entsprechenden Schmiermittelversorgung in Verbindung. Hierdurch wird erreicht, daß das aus der Austrittsöffnung 57 austretende Schmiermittel durch das über den Zuleitungskanal 55 zuströmende gasförmige Trägermedium in den durch die Nuten 50 definierten Zwischenraum zwischen Zylinderwandung 8 und Kolbenaußenfläche 25 einströmen kann.

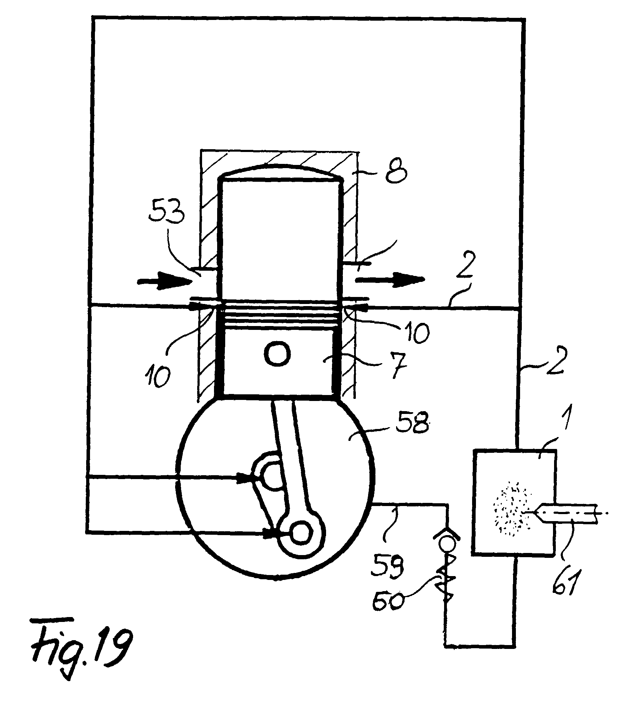

In Fig. 19 ist schematisch ein Zweitakt-Verbrennungsmotor dargestellt, dessen Zylinder 8 mit einem Überströmkanal 53 und einem Auslaßkanal 54 versehen ist und der als sogenannter kurbelkastengespülter Motor ausgebildet ist. Dieser verdichtet bei der Abwärtsbewegung des Kolbens 7 die Luft im Kurbelgehäuse 58. Die verdichtete Luft kann dann zum Öffnungszeitpunkt der Überströmkanäle in den Verbrennungsraum einströmen, wird dort weiter komprimiert. Der Brennstoff wird dann eingespritzt und in üblicher Weise über eine Zündkerze gezündet, so daß der Kolben 7 in der Abwärtsbewegung seinen Arbeitstakt ausführen kann. Nach Beendigung des Arbeitstaktes wird der Auslaßkanal 54 freigegeben, so daß die verbrannten Abgase durch die einströmende Frischluft aus dem Zylinderraum ausgepült werden.

Während der Abwärtsbewegung des Kolbens 7 entsteht im Kurbelgehäuse 58 ein Überdruck, der zum Öffnungszeitpunkt der Überströmkanäle sein Maximum erreicht. Diese Druckpulsation im Kurbelgehäuse kann nun genutzt werden, um aus dem Kurbelgehäuse über eine Luftleitung 59, in der ein Rückschlagventil 60 angeordnet ist, Luft in eine Aufbereitungseinrichtung 1 zu fördern, die dann über entsprechende Transportleitungen 2, wie schon in Fig. 1 dargestellt, zu den Zuführöffnungen 10 für das Schmiergemisch geführt sind. Während der Aufwärtsbewegung des Kolbens 7 entsteht im Kurbelgehäuse 58 ein Unterdruck zur Ansaugung der Frischluft. In dieser Phase erfolgt dann ein Transport der Luft durch die Transportleitungen 2 zu den jeweiligen Zuführöffnungen 10. Hierbei kann dann, wie in Fig. 18 dargestellt, über diese Luft das über gesonderte Zuleitungen 56 zugeführte Schmiermittel unmittelbar vor der Einführung in den Zylinder zerstäubt werden.

Bei der hier dargestellten Ausführungsform ist es aber auch möglich, die Ausbereitungseinrichtung 1 als Behälter auszubilden, in den über eine Zerstäubereinrichtung 61 das Schmiermittel zerstäubt wird, so daß aus diesem Behälter durch die Transportleitungen 2 ein Öl-Luft-Gemisch an die Zufuhröffnungen 10 geführt wird. Wie anhand von Fig. 1 dargestellt und beschrieben, können die Transportleitungen 2 auch noch bis an die Kurbelwellenlagerung und die Pleuellagerung geführt werden, so daß auch diese Lager mit geschmiert werden.

## Patentansprüche

1. Verfahren zum Versorgen der Schmierstellen eines Verbrennungsmotors, zumindest der Laufflächen der Kolben/Zylinderrohreinheit eines Verbrennungsmotors, mit einem flüssigen Schmiermittel, wobei das Schmiermittel in wenigstens einer Aufbereitungseinrichtung (1) mit einem gasförmigen Transportmedium unter Bildung eines Schmiergemisches zusammengeführt wird, das in Form kleiner vom Transportmedium getragener Flüssigkeitsteilchen durch Zuführungen (2) in den Bereich der Schmierstelle (17, 19, 21, 23) geleitet und in Form kleiner Flüssigkeitsteilchen auf die zu schmierenden Oberflächen (25, 26) aufgebracht wird, dadurch **gekennzeichnet**, daß das gasförmige Transportmedium und überflüssiges Schmiermittel über wenigstens eine im Bereich der Schmierstelle (17, 19, 21, 23) angeordnete Abführung (37, 38, 51) abgezogen werden.

2. Verfahren nach Anspruch 1, dadurch gekennzeichnet, daß das Schmiergemisch in Teilströme aufgeteilt wird und daß die unterschiedlichen Dosierungen für die jeweiligen Schmierstellen (17, 19, 21, 23) durch entsprechende Strömungswiderstände in den jeweiligen Zuführungen (2) für die Teilströme bewirkt werden.

3. Verfahren nach einem der Ansprüche 1 und 2, dadurch gekennzeichnet, daß die unterschiedlichen Strömungswiderstände durch unterschiedliche Querschnittsabmessungen und/oder -geometrien im Bereich der Austrittsöffnungen der jeweiligen Zuführungen (2) gebildet werden.

4. Verfahren nach einem der Ansprüche 1 bis 3, dadurch gekennzeichnet, daß das Schmiergemisch nahezu kontinuierlich der Schmierstelle zugeführt wird.

5. Verfahren nach einem der Ansprüche 1 bis 4, dadurch gekennzeichnet, daß die Dosierung des Schmiermittels durch Änderung des Volumenstroms des Transportmediums und/oder der Konzentration des Schmiermittels im Transportmedium erfolgt.

6. Verfahren nach einem der Ansprüche 1 bis 5, dadurch gekennzeichnet, daß die Dosierung des Schmiermittels in Abhängigkeit von der Last und/oder der Drehzahl der Hubkolbenmaschine (6) erfolgt.

7. Verfahren nach einem der Ansprüche 1 bis 6, dadurch gekennzeichnet, daß das Schmiergemisch durch wenigstens eine mit der Zuführbohrung (10) in der Zylinderwand (8) zusammenwirkdende Bohrung (24) im Kolben (7) dem oberen Pleuellager (23) zugeführt wird.

8. Verfahren nach einem der Ansprüche 1 bis 7, dadurch gekennzeichnet, daß das Schmiergemisch über eine auf der Außenfläche (25) des Kolbens (7) verlaufende und zumindest mit einem Ende im Kolbenbolzenauge (28) mündende Nut (27) dem oberen Pleuellager (23) durch Bohrungen im Kolbenbolzen (30), die im Lagerbereich angeordnet sind, zugeführt wird.

9. Verfahren nach einem der Ansprüche 1 bis 8, dadurch gekennzeichnet, daß das Schmiermittel in Form eines Schmiermittelwandfilms (46) zumindest auf die zu schmierende Oberfläche (26) aufgebracht wird, in welche die Zuführung (2) mündet.

10. Verfahren nach einem der Ansprüche 1 bis 9, dadurch gekennzeichnet, daß das Schmiermittel in den Zuführungen als Wandfilm (41) transportiert wird.

11. Verfahren nach einem der Ansprüche 1 bis 10, dadurch gekennzeichnet, daß das Schmiergemisch mit Überdruck zu den einzelnen Schmierstellen geführt wird.

12. Verfahren nach einem der Ansprüche 1 bis 11, dadurch gekennzeichnet, daß die Abführung (37, 38) mit Unterdruck beaufschlagt wird.

13. Anordnung für die Versorgung der Schmierstellen einer Hubkolbenmaschine, insbesondere eines Verbrennungsmotors mit einem flüssigen Schmiermittel in Form kleiner Flüssigkeitsteilchen, die über ein Transportmedium auf die zu schmierenden Oberflächen aufgebracht wird, insbesondere für die Durchführung des Verfahrens nach den Ansprüchen 1 bis 12, bei der die Zylinderwand (8) einer Kolben/Zylinderrohreinheit (21) wenigstens eine Zuführbohrung (10) aufweist, die bei der Stellung des Kolben (7) im unteren Totpunkt unterhalb des obersten Kolbenringes (9) in den Zwischenraum (11) zwischen Kolben (7) und Zylinderwand (8) mündet und durch welche Schmiergemisch zugeführt wird und bei der auf der Kolbenaußenfläche (25) wenigstens eine Nut (50) angeordnet ist, die, ausgehend vom Bereich des unteren Kolbenendes, einen im wesentlichen in axialer Richtung sich erstreckenden Nutteil (50.1) und im Bereich der Kolbenringe (9) vorzugsweise unterhalb des untersten Kolbenringes einen sich daran anschließenden in Kolbenumfangsrichtung verlaufenden Nutteil (50.3) aufweist und bei der die in der Zylinderwand 8 angeordnete Zuführungsbohrung 10 für das Schmiergemisch in den axialen Nutteil (50.1) ausmündet und so angeordnet ist, daß sie in oberen Totpunktstellung des Kolbens (7) in das untere Ende des axialen Nutteils (50.1) ausmündet, dadurch gekennzeichnet, daß in dem in Kolbenumfangsrichtung verlaufenden Nutteil (50.3) eine in das Kolbeninnere, vorzugsweise in das Kolbenlager mündende Entlüftungsbohrung (51) vorgesehen ist und daß der axiale Nutteil (50.1) in seinem Verlauf im Bereich des oberen Endes (50.2) gegenüber dem unteren Ende (50.1) in Umfangsrichtung versetzt angeordnet ist, so daß bei einer Kolbenstellung vor dem Erreichen des unteren Totpunktes die Zuführbohrung (10) von der Kolbenaußenfläche über einen vorgegebenen Bewegungsbereich des Kolbens (7) abgedeckt ist.

14. Anordnung nach Anspruch 13, dadurch gekennzeichnet, daß der Übergangsbereich (50.5) zwischen dem oberen Ende (50.2) des axialen Nutteils und dem in Umfangsrichtung verlaufenden Nutteil (50.3) so geführt ist, daß in der unteren Totpunktstellung des Kolbens (7) eine Verbindung zwischen der Nut (50) und der Zuführbohrung (10) wieder besteht.

15. Anordnung nach einem der Ansprüche 13 oder 14, dadurch gekennzeichnet, daß die Nut (50) im wesentlichen U-förmig auf der Kolbenaußenfläche (25) angeordnet ist und daß je Nut je zwei Zuführbohrungen (10) so in der Zylinderwand (25) angeordnet sind, daß jeweils eine Zuführbohrung (10) je einem axialen Nutteil (50.1) zugeordnet ist.

16. Anordnung nach einem der Ansprüche 13 bis 15, dadurch gekennzeichnet, daß die Zuführbohrungen (10) bei Zweitakt-Verbrennungsmotoren mit Ein- und Auslaßschlitzen in Umfangsrichtung zwischen den Schlitzen unterhalb des obersten Kolbenringes (9) bei Kolbenstellung im unteren Totpunkt angeordnet sind.

17. Verfahren nach einem der Ansprüche 13 bis 16, dadurch gekennzeichnet, daß ein Ende der Nut (27) auf der Außenfläche (25) des Kolbens (7) im Bolzenauge (28) mündet und wenigstens eine radial verlaufende Bohrung im Kolbenbolzen (30) für die Zuführung des Schmiergemisches zu dem oberen Pleuellager (23) vorgesehen ist.

18. Anordnung nach einem der Ansprüche 13 bis 17, dadurch gekennzeichnet, daß der Kolben (7) wenigstens eine mit dem oberen Pleuellager (23) zusammenwirkende Bohrung (24) aufweist, die in die äußere Oberfläche (25) des Kolbens (7) mündet und mit der Zuführbohrung (10) in der Zylinderwand (8) zusammenwirkt.

19. Anordnung nach einem der Ansprüche 13 bis 18, dadurch gekennzeichnet, daß die Zuführbohrung (10) bei einem Schmiermitteltransport als Wandfilm (41) unmittelbar vor der Schmierstelle eine Querschnittsverengung (43) aufweist, deren Ende (45) derart ausgebildet ist, daß sich ein Schmiermittelwandfilm (46) auf der Innenfläche (26) der Zylinderwand (8) einstellt.

20. Anordnung nach einem der Ansprüche 13 bis 19, dadurch gekennzeichnet, daß die Zuführbohrung (10) mit einer Zufuhrleitung (55) für ein gasförmiges Trägermedium in Verbindung steht und daß in diese Zufuhrleitung (55) mit Abstand vor der Zuführbohrung (10) eine Zuleitung (56) für ein flüssiges Schmiermittel ausmündet.

21. Anordnung nach Anspruch 19 oder 20, dadurch gekennzeichnet, daß die Zuführbohrung (10) bei einem Schmiermitteltransport in Form kleiner vom Transportmedium getragener Flüssigkeitsteilchen unmittelbar vor der Schmierstelle eine Querschnittsverengung aufweist, deren Ende derart ausgebildet ist, daß sich eine Strömungsumlenkung einstellt.

22. Anordnung nach einem der Ansprüche 13 bis 21, dadurch gekennzeichnet, daß die Zuführbohrung (10) auf der Druckseite und/oder Gegendruckseite des Kolbens (7) angeordnet sind.

23. Anordnung nach einem der Ansprüche 13 bis 22, dadurch gekennzeichnet, daß die Zuführbohrung (10) beim Schmiermitteltransport in Form kleiner vom Transportmedium getragener Flüssigkeitsteilchen unmittelbar vor der Schmierstelle eine Querschnittserengung in Form eines porösen Körpers aufweist, wodurch innerhalb der Querschnittsverengung Strömungsumlenkungen bewirkt werden, die zu einem Tropfenwachstum führen.

## Claims

1. Method for supplying the lubrication points of an internal combustion engine, at least the running surfaces of the piston/cylinder tube unit of an internal combustion engine, with a liquid lubricant, wherein the lubricant is brought together in at least one preparation device (1) with a gaseous conveying medium so as to form a lubricating mixture which is carried in the form of small liquid particles borne by the conveying medium through supply lines (2) into the region of the lubrication points (17, 19, 21, 23) and applied in the form of small liquid particles to the surfaces (25, 26) to be lubricated, characterised in that the gaseous conveying medium and excess lubricant are removed via at least one evacuation line (37, 38, 51) disposed in the region of the lubrication point (17, 19, 21, 23).

2. Method according to claim 1, characterised in that the lubricating mixture is divided into partial flows, and that the different dosages for the respective lubrication points (17, 19, 21, 23) are produced by appropriate flow resistances in the respective supply lines (2) for the partial flows.

3. Method according to one of claims 1 and 2, characterised in that the different flow resistances are formed by different cross-sectional dimensions and/or geometries in the region of the outlet openings of the respective supply lines (2).

4. Method according to one of claims 1 to 3, characterised in that the lubricating mixture is supplied almost continuously to the lubrication point.

5. Method according to one of claims 1 to 4, characterised in that the lubricant is metered by altering the volumetric flow of the conveying medium and/or the concentration of the lubricant in the conveying medium.

6. Method according to one of claims 1 to 5, characterised in that the lubricant is metered in accordance with the load and/or the speed of the reciprocating-piston engine (6).

7. Method according to one of claims 1 to 6, characterised in that the lubricating mixture is supplied to the top connecting rod bearing (23) through at least one hole (24) in the piston (7) which co-operates with the supply hole (10) in the cylinder wall (8).

8. Method according to one of claims 1 to 7, characterised in that the lubricating mixture is supplied to the top connecting rod bearing (23) through holes in the gudgeon pin (30), which are disposed in the bearing region, via a groove (27) which extends in the outer surface (25) of the piston (7) and ends at least at one end in the gudgeon pin boss (28).

9. Method according to one of claims 1 to 8, characterised in that the lubricant is applied in the form of a lubricant wall film (46) at least to the surface (26) to be lubricated into which the supply line (2) leads.

10. Method according to one of claims 1 to 9, characterised in that the lubricant is conveyed in the supply lines as a wall film (41).

11. Method according to one of claims 1 to 10, characterised in that the lubricating mixture is supplied to the individual lubrication points at a pressure above atmospheric.

12. Method according to one of claims 1 to 11, characterised in that the evacuation line (37, 38) is acted upon by a pressure below atmospheric.

13. Arrangement for supplying the lubrication points of a reciprocating-piston engine, in particular of an internal combustion engine, with a liquid lubricant in the form of small liquid particles which are applied via a conveying medium to the surfaces to be lubricated, in particular for carrying out the method according to claims 1 to 12, wherein the cylinder wall (8) of a piston/cylinder tube unit (21) comprises at least one supply hole (10) which, when the piston (7) is in the bottom dead centre position, leads into the interspace (11) between the piston (7) and the cylinder wall (8) below the top piston ring (9) and through which lubricating mixture is supplied, wherein at least one groove (50) is disposed in the outer piston surface (25), which groove, starting from the region of the bottom piston end, comprises a groove part (50.1) extending essentially in the axial direction, and a groove part (50.3), which adjoins the groove part (50.1) and extends in the circumferential direction of the piston, in the region of the piston rings (9), preferably below the bottom piston ring, and wherein the supply hole (10), which is disposed in the cylinder wall (8), for the lubricating mixture leads into the axial groove part (50.1) and is disposed such that it leads into the bottom end of the axial groove part (50.1) when the piston (7) is in the top dead centre position, characterised in that a vent hole (51) is provided in the groove part (50.3) extending in the circumferential direction of the piston and leads into the piston interior, preferably into the piston bearing, and that, in its path in the region of the top end (50.2), the axial groove part (50.1) is staggered with respect to the bottom end (50.1) in the circumferential direction, so that the supply hole (10) is covered by the outer piston surface over a predetermined range of movement of the piston (7) when the piston is in a position before reaching the bottom dead centre.

14. Arrangement according to claim 13, characterised in that the transition area (50.5) between the top end (50.2) of the axial groove part and the groove part (50.3) extending in the circumferential direction is formed such that there is again a connection between the groove (50) and the supply hole (10) when the piston (7) is in the bottom dead centre position.

15. Arrangement according to one of claims 13 and 14, characterised in that the groove (50) extends essentially in the form of a U in the outer piston surface (25), and that two supply holes (10) are disposed in the cylinder wall (25) for each groove such that a supply hole (10) is associated with each axial groove part (50.1).

16. Arrangement according to one of claims 13 to 15, characterised in that, in the case of two-stroke internal combustion engines with inlet and outlet ports, the supply holes (10) are disposed between the ports in the circumferential direction below the top piston ring (9) when the piston is in the bottom dead centre position.

17. Method according to one of claims 13 to 16, characterised in that one end of the groove (27) in the outer surface (25) of the piston (7) ends in the pin boss (28), and at least one radially extending hole is provided in the gudgeon pin (30) to supply the lubricating mixture to the top connecting rod bearing (23).

18. Arrangement according to one of claims 13 to 17, characterised in that the piston (7) comprises at least one hole (24) which co-operates with the top connecting rod bearing (23), leads into the outer surface (25) of the piston (7) and co-operates with the supply hole (10) in the cylinder wall (8).

19. Arrangement according to one of claims 13 to 18, characterised in that, when the lubricant is conveyed as a wall film (41), the supply hole (10) has a necked portion (43) directly before the lubrication point whose end (45) is formed such that a lubricant wall film (46) is produced on the inner surface (26) of the cylinder wall (8).

20. Arrangement according to one of claims 13 to 19, characterised in that the supply hole (10) communicates with a supply line (55) for a gaseous carrier medium, and that a feed line (56) for a liquid lubricant leads into this supply line (55) at a distance before the supply hole (10).

21. Arrangement according to claim 19 or 20, characterised in that, when the lubricant is conveyed in the form of small liquid particles borne by the conveying medium, the supply hole (10) has a necked portion directly before the lubrication point whose end is formed so as to cause the flow to be deflected.

22. Arrangement according to one of claims 13 to 21, characterised in that the supply hole (10) is disposed on the pressure side and/or the back pressure side of the piston (7).

23. Arrangement according to one of claims 13 to 22, characterised in that, when the lubricant is conveyed in the form of small liquid particles borne by the conveying medium, the supply hole (10) has a necked portion in the form of a porous body directly before the lubrication point, so that flow deflections resulting in a growth in the drop size are produced within the necked portion.

## Revendications

1. Procédé pour alimenter en lubrifiant liquide les points de lubrification d'un moteur thermique, du moins les surfaces frottantes de l'ensemble piston/tube cylindrique d'un moteur thermique, le lubrifiant étant, dans au moins un dispositif de préparation (1), réuni à un fluide de transport gazeux en formant un mélange lubrifiant qui, par des moyens d'alimentation (2), est dirigé dans la région du point de lubrification (17, 19, 21, 23) sous la forme de petites particules de liquide portées par le fluide de transport, et qui est appliqué sur les surfaces à lubrifier (25, 26) sous la forme de petites particules de liquide, **caractérisé** en ce que le fluide de transport gazeux et le lubrifiant excédentaire sont évacués par l'intermédiaire d'au moins un moyen d'évacuation (37, 38, 51) disposé dans la région du point de lubrification (17, 19, 21, 23).

2. Procédé selon la revendication 1, **caractérisé** en ce que le mélange lubrifiant est divisé en flux partiels, et en ce que les dosages différents pour les points de lubrification respectifs (17, 19, 21, 23) sont produits par des résistances correspondantes à l'écoulement dans les moyens d'alimentation respectifs (2) pour les flux partiels.

3. Procédé selon la revendication 1 ou 2, **caractérisé** en ce que les résistances différentes à l'écoulement sont formées par des dimensions de section et/ou des géométries de section différentes dans la région des ouvertures de sortie des moyens d'alimentation respectifs (2).

4. Procédé selon l'une des revendications 1 à 3, **caractérisé** en ce que le mélange lubrifiant est apporté pratiquement en continu au point de lubrification.

5. Procédé selon l'une des revendications 1 à 4, **caractérisé** en ce que le dosage du lubrifiant s'effectue par modification du débit volumique du fluide de transport et/ou de la concentration du lubrifiant dans le fluide de transport.

6. Procédé selon l'une des revendications 1 à 5, **caractérisé** en ce que le dosage du lubrifiant s'effectue en fonction de la charge et/ou du régime du moteur à pistons alternatifs (6).

7. Procédé selon l'une des revendications 1 à 6, **caractérisé** en ce que le mélange lubrifiant est apporté au palier de tête de bielle (23) par au moins un perçage (24), pratiqué dans le piston (7) et coopérant avec le perçage d'alimentation (10) dans la paroi (8) du cylindre.

8. Procédé selon l'une des revendications 1 à 7, **caractérisé** en ce que le mélange lubrifiant est, par l'intermédiaire d'une rainure (27) s'étendant sur la face extérieure (25) du piston (7) et débouchant par au moins une extrémité dans le bossage d'axe de piston (28), apporté au palier de tête de bielle (23) par des perçages pratiqués dans l'axe de piston (30), perçages qui sont disposés dans la région du palier.

9. Procédé selon l'une des revendications 1 à 8, **caractérisé** en ce que le lubrifiant est appliqué sous la forme d'un film de paroi de lubrifiant (46) au moins sur la surface à lubrifier (26) dans laquelle débouche le moyen d'alimentation (2).

10. Procédé selon l'une des revendications 1 à 9, **caractérisé** en ce que le mélange lubrifiant est transporté sous forme de film de paroi (41) dans les moyens d'alimentation.

11. Procédé selon l'une des revendications 1 à 10, **caractérisé** en ce que le mélange lubrifiant est apporté en surpression aux différents points de lubrification.

12. Procédé selon l'une des revendications 1 à 11, **caractérisé** en ce que le moyen d'évacuation (37, 38) est sollicité en dépression.

13. Système pour alimenter les points de lubrification d'un moteur à pistons alternatifs, notamment d'un moteur thermique, en lubrifiant liquide sous la forme de petites particules de liquide qui est appliqué au moyen d'un fluide de transport sur les surfaces à lubrifier, notamment pour la mise en oeuvre du procédé selon les revendications 1 à 12, système selon lequel la paroi de cylindre (8) d'un ensemble piston/tube cylindrique (21) présente au moins un perçage d'alimentation (10) qui, lorsque le piston (7) se trouve au point mort bas, débouche en dessous du plus haut segment de piston (9) dans l'espace intermédiaire (11) entre le piston (7) et la paroi de cylindre (8), perçage par lequel est apporté un mélange lubrifiant, et selon lequel au moins une rainure (50) est disposée sur la face extérieure (25) du piston, rainure qui, en partant de la région de l'extrémité inférieure du piston, présente une partie de rainure (50.1) s'étendant essentiellement en direction axiale et, dans la région des segments de piston (9), de préférence en dessous du plus bas segment de piston, une partie de rainure (50.3) se raccordant à la précédente en s'étendant dans la direction circonférentielle du piston, et système selon lequel le perçage d'alimentation (10) pour le lubrifiant qui est disposé dans la paroi de cylindre (8) débouche dans la partie de rainure axiale (50.1) et est disposé de telle sorte que, dans la position de point mort haut du piston (7), il débouche dans l'extrémité inférieure de la partie de rainure axiale (50.1), **caractérisé** en ce qu'un perçage d'évacuation d'air (51) débouchant à l'intérieur du piston, de préférence dans le palier de piston, est prévu dans la partie de rainure (50.3) s'étendant dans la direction circonférentielle du piston, et en ce que la partie de rainure axiale (50.1) présente un développement qui est décalé en direction circonférentielle dans la région de l'extrémité supérieure (50.2) par rapport à l'extrémité inférieure (50.1), de sorte que, dans la position du piston avant l'atteinte du point mort bas, le perçage d'alimentation (10) est recouvert par la face extérieure du piston sur une plage prédéfinie de déplacement du piston (7).

14. Système selon la revendication 13, **caractérisé** en ce que la région de transition (50.5) entre l'extrémité supérieure (50.2) de la partie de rainure axiale et la partie de rainure (50.3) s'étendant en direction circonférentielle est dirigée de telle sorte que, dans la position de point mort bas du piston (7), il existe à nouveau une liaison entre la rainure (50) et le perçage d'alimentation (10).

15. Système selon la revendication 13 ou 14, **caractérisé** en ce que la rainure (50) est disposée sensiblement en forme de U sur la face extérieure (25) du piston, et en ce que, pour chaque rainure, deux perçages d'alimentation (10) sont disposés dans la paroi de cylindre (8) de telle sorte qu'une partie de rainure axiale (50.1) est chaque fois associée à un perçage d'alimentation respectif (10).

16. Système selon l'une des revendications 13 à 15, **caractérisé** en ce que les perçages d'alimentation (10), pour des moteurs thermiques à deux temps avec des lumières d'admission et d'échappement, sont disposés entre les lumières en direction circonférentielle en dessous du plus haut segment de piston (9) lorsque le piston se trouve au point mort bas.

17. Système selon l'une des revendications 13 à 16, **caractérisé** en ce qu'une extrémité de la rainure (27) prévue sur la face extérieure (25) du piston (7) débouche dans le bossage d'axe de piston (28), et au moins un perçage s'étendant radialement est prévu dans l'axe de piston (30) pour l'apport du mélange lubrifiant au palier de tête de bielle (23).

18. Système selon l'une des revendications 13 à 17, **caractérisé** en ce que le piston (7) présente au moins un perçage (24) coopérant avec le palier de tête de bielle (23), perçage qui débouche dans la surface extérieure (25) du piston (7) et coopère avec le perçage d'alimentation (10) dans la paroi de cylindre (8).

19. Système selon l'une des revendications 13 à 18, **caractérisé** en ce que le perçage d'alimentation (10), dans le cas d'un transport du lubrifiant sous forme de film de paroi (41), présente juste avant le point de lubrification un rétrécissement de section (43) dont l'extrémité (45) est configurée de telle sorte qu'un film de paroi de lubrifiant (46) se forme sur la face intérieure (26) de la paroi de cylindre (8).

20. Système selon l'une des revendications 13 à 19, **caractérisé** en ce que le perçage d'alimentation (10) est relié à une conduite d'alimentation (55) pour un fluide de transport gazeux, et en ce qu'une conduite d'amenée (56) pour un lubrifiant liquide débouche dans cette conduite d'alimentation (55) à distance en amont du perçage d'alimentation (10).

21. Système selon la revendication 19 ou 20, **caractérisé** en ce que le perçage d'alimentation (10), dans le cas d'un transport du lubrifiant sous la forme de petites particules de liquide portées par le fluide de transport, présente juste avant le point de lubrification un rétrécissement de section dont l'extrémité est configurée de telle sorte qu'une déviation de l'écoulement est obtenue.

22. Système selon l'une des revendications 13 à 21, **caractérisé** en ce que les perçages d'alimentation (10) sont disposés sur le côté de poussée et/ou sur le côté de contre-poussée du piston (7).

23. Système selon l'une des revendications 13 à 22, **caractérisé** en ce que le perçage d'alimentation (10), dans le cas d'un transport du lubrifiant sous la forme de petites particules de liquide portées par le fluide de transport, présente juste avant le point de lubrification un rétrécissement de section sous la forme d'un corps poreux, de sorte que sont produites, à l'intérieur du rétrécissement de section, des déviations de l'écoulement qui engendrent un grossissement des gouttes.
